# EUROPEAN PATENT SPECIFICATION

(11) **EP 0 699 502 B1**
(45) Date of publication and mention of the grant of the patent: **14.05.1997**
(21) Application number: 95830353.9
(22) Date of filing: 03.08.1995
(51) Int. Cl.: B23Q 7/00, B65G 17/24, B65G 17/00, B23Q 7/14

(54) **Device for transporting pallets carrying pieces in a production line**
Vorrichtung zum Transportieren von werkstücktragenden Paletten in einer Fertigungsstrasse
Dispositif pour transporter des palettes portant des pièces dans une ligne de production

(30) Priority: 04.08.1994 IT TO940645
(43) Date of publication of application: 06.03.1996
(73) Proprietor: COMAU S.p.A., 10095 Grugliasco (Torino) (IT)
(72) Inventor: Bonelli, Massimo, I-10024 Moncalieri (Torino) (IT)
(74) Representative: Notaro, Giancarlo

(56) References cited:
- DE-A- 2 742 095
- DE-A- 4 322 403
- DE-U- 9 204 317
- GB-A- 2 111 010

## Description

The present invention relates to devices for transporting pallets carrying pieces in a production line, of the type comprising:
- a fixed supporting structure, and
- at least an endless chain guided on the fixed supporting structure and carrying freely rotatable rollers for supporting piece-carrying pallets at the upper run of said chain, so that said pallets are advanced along the fixed supporting structure as a result of the chain movement, at the same speed of the chain (5), wherein at one or more stations of the production line the fixed supporting structure is provided at its upper part with an auxiliary supporting structure, on which the upper run of the chain directly rests (see DE-U-9204317).

Devices of the above indicated type have been used for a long time in production lines of various types, such as assembling lines for motor-vehicle engines, e.g. for engine blocks or cylinder heads. According to this solution, the pieces are brought in sequence to the various work stations of the line by means of pallets which are transported by the chain device. When a pallet with the associated piece is stopped at a determined work station, the chain keeps on moving sliding below the pallet. In this condition, it is necessary to assure a precise positioning of the pallet with respect to the work equipment, since the transporting chain is subject to lateral play, as well as to wear of the surface of the rollers and the supporting guides for the chain, which causes a variation in the position of the pallet along the vertical direction. According to the conventional art, the proper positioning of the pallet at the work station is obtained by the use of a supporting equipment provided with extendable reference bolts, adapted to engage corresponding reference bushes which are associated with the pallet.

The main drawback of the above indicated known solution lies in that it implies a relatively complicated and costly structure, also because in the locked condition of the pallet in the proper position, the movable reference equipment must support the weight of the pallet and the piece resting thereon.

The object of the present invention is that of providing a transporting device which is able to assure the precise positioning of the pallet with a relatively simple and unexpensive structure.

Another problem which is found in the known devices, lies in that the pallet needs a relatively long time to accelerate up to the transporting speed of the chain, when it is left free at the end of a work stage, since initially the chain rollers tend to slide under the pallet without causing it to move.

A further object of the present invention is that of providing a device of the type indicated at the beginning which is also able to solve this drawback.

In view of achieving said objects, the invention provides a device for transporting piece-carrying pallets in a production line, of the type indicated at the beginning of the present description, characterized in that:
- this auxiliary structure is vertically movable with respect to the fixed supporting structure between a raised and a lowered position,
- said fixed supporting structure is provided with reference seats adapted to receive and support corresponding reference parts of a pallet when the latter is held at a station of the line and the auxiliary supporting structure is in its lowered position, so as to provide a precise reference for the proper position of the pallet at said station,
- the fixed supporting structure is provided with actuating means to cause movement of the auxiliary supporting structure between its lowered position and its raised position.

In a preferred embodiment, the fixed supporting structure is formed by a profile element having at its upper part a channel within which there is vertically slidably mounted a longitudinal portion of said auxiliary supporting structure, and said actuating means comprises at least one actuating cylinder interposed between facing walls of said channel and said longitudinal portion.

According to a further feature, said auxiliary supporting structure is provided at its upper part with a biassing plate, which can be raised from a lowered position to a raised position with respect to the auxiliary supporting structure, by means of at least one actuating cylinder provided on said structure, so as to urge said rollers of the upper run of the chain against the lower surface of the pallet, in order to favour acceleration of the pallet up to a speed which is the double of the transporting speed of the chain, when the pallet is not held any longer at a station of the line.

Due to the above indicated features, the proper positioning of each pallet at a determined work station can be obtained with simple and unexpensive means. Indeed, the reference seats for positioning of the pallet are formed by stationary elements, connected to the fixed supporting structure, with resulting simplification from the standpoint of construction with respect to the prior art which provides movable reference elements. The reference seats receive corresponding parts of the pallet as a result of the lowering to which the latter is subject when said auxiliary supporting structure is lowered, so that the weight of the pallet rests on said seats.

By adopting said biassing plate, furthermore, the chain rollers are urged against the lower surface of the pallet after that the pallet is not held any longer, at the end of a work stage in a station of the line, so as to bring rapidly the pallet to a speed double of the transporting speed of the chain.

Further features and advantages of the invention will become apparent from the description which follows with reference to the annexed drawings, given purely by way of non limiting example, in which:
- figure 1 is a cross-sectional view of the device according to the invention,
- figure 2 is a view at an enlarged scale of a detail of the device of figure 1,
- figure 3 is a view of a detail of figure 2 in a different condition of operation,
- figure 4 is a cross-sectional partial view taken along line IV-IV of figure 3,
- figure 5 is a plan view of the detail of figures 2, 3, and
- figure 6 is a side view of the same detail.

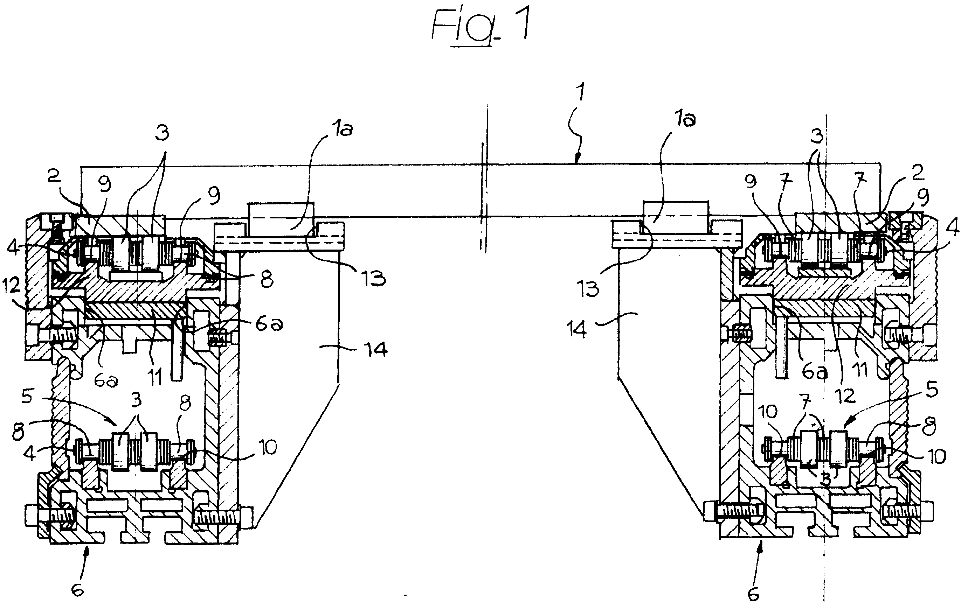

With reference to figure 1, numeral 1 designates a piece-carrying pallet, diagrammatically illustrated, forming part of a number of pallets which are moved along a production line in a direction perpendicular to the plane of figure 1 in order to bring in sequence a number of pieces (not shown), which rest on said pallets, to a plurality of work stations (also not shown) forming part of the line.

Each pallet 1 has on its lower surface two side skids 2 which rest on rollers 3 which are freely rotatably mounted on pins 4 of two endless chains 5 which are guided on two side extruded profiles 6 forming a fixed supporting structure.

More in detail, each chain 5 has a plurality of pins 4 connected to each other by metal links 7 pivoted to pins 4. Each pin 4 supports two end rollers 8 which roll on supporting tracks of profile 6, respectively designated by 9 and 10, for the upper run and the lower run of each chain 5.

Each chain 6 is guided around two chain wheels (not shown) at least one of which is driven by a motor, in order to cause movement of the chain.

Still with reference to figures 1-3, each pin 4 of the chain freely rotatably supports at its central portion two rollers 3 for transporting pallet 1. During the movement of the chain, rollers 8 of the chain roll on tracks 9, 10, whereas rollers 3 transport pallet 1. When the latter is stopped by stop means (not shown) at a determined work station, the chain keeps on moving and the rollers 3 roll under the pallet. When the operations which must be carried out on the piece supported by the pallet come to an end, said stop means is deactivated, so that the pallet is free to move as a result of the movement of rollers 3.

When a pallet 1 is stopped at a work station, it is necessary to lock it in a predetermined precise position, in order to enable the work equipment to work in a programmed proper way.

To this end, each profile 6 has at its upper part a channel 6a within which there is vertically slidably mounted a longitudinal portion 11 of an auxiliary supporting structure 12. The auxiliary structure 12 is that which supports directly the upper run of the chain, since tracks 9 are directly formed thereon, on which rollers 8 roll.

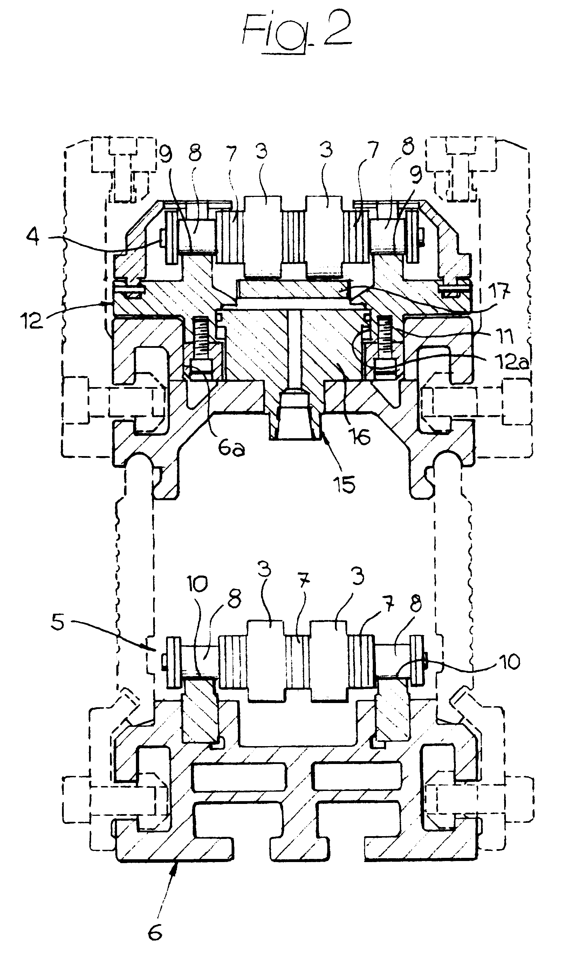

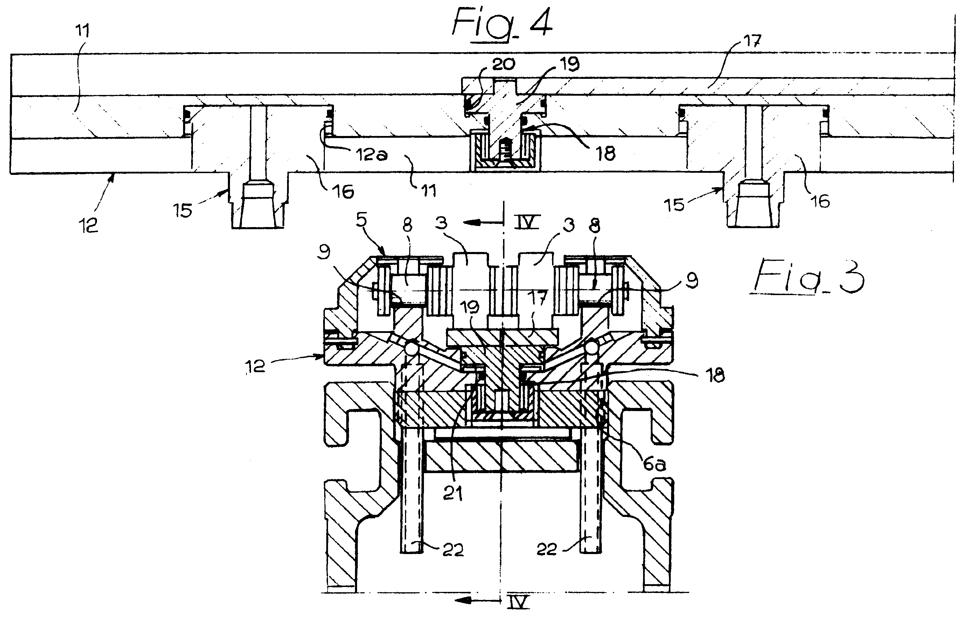

The auxiliary structure 12 is movable between an operative raised position (figure 3) corresponding to the condition of normal use, for transporting pallet 1, and a lowered position (figure 2) in which pallet 1 rests with reference lower parts 1a (figure 1) within corresponding reference seats 13 formed in a structure 14 connected to the fixed profiles 6 and shaped so as to assure a reference for the precise positioning of pallet 1 at the work station.

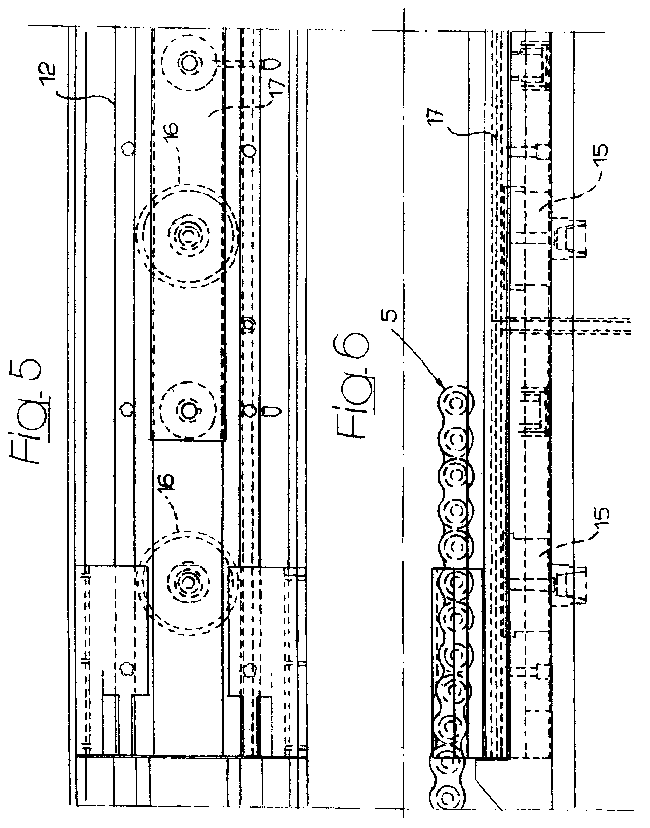

The movement of the auxiliary supporting structure 12 between its raised position and its lowered position is driven by a plurality of pneumatic actuating cylinders 15 each comprised of a piston 16 fixed to the profile 6 and slidably mounted within a cylindrical cavity 12a of the auxiliary supporting structure 12 (see figure 2 and figures 4-6).

In order to favour a rapid acceleration of pallet 1 as soon as the pallet stop means is deactivated, to allow the pallet to get out of a work station, each auxiliary supporting structure 12 is provided at its upper part with one or more elongated plates 17 which are movable from a lowered position (figure 2) to a raised position (figure 3) with respect to the auxiliary supporting structure 12, to urge the rollers 3 of the upper run of the chain from below against pallet 1, so as to favour acceleration of the pallet up to a speed which is the double of the transporting speed of the chain, once the pallet stop means is deactivated. The movement of each biassing plate 17 between its lowered position and its raised position is obtained by means of one or more pneumatic actuating cylinders 18 including a piston 19 connected to plate 17 and slidably mounted within a cylindrical cavity 20 (figure 4) of the auxiliary supporting structure 12. The cylinder has a chamber 21 (figure 3) which is fed with pressurized air by means of a supply conduit 22, connected to chamber 21 by passages formed within the auxiliary supporting structure 12.

In operation, when pallet 1 must be transported along the production line, the actuating cylinders 15 keep the auxiliary supporting structure 12 in its raised position (figure 2) in which parts 1a of the pallet are spaced from the bottom walls of the seats 13, so that the weight of the pallet rests, through rollers 3, pins 4 and rollers 8 of each chain 5, on each auxiliary supporting structure 12 and as a consequence on profiles 6. In this stage, the biassing plates 17 are spaced from rollers 3, since the system is in a normal running condition, in which pallets 1 travel at the same speed of chains 5.

When a pallet 1 is stopped at a work station, the chain keeps on moving, with rollers 3 of the upper run thereof sliding under the lower surface of the pallet. As already discussed above, the actuating cylinders 15 are deactivated to lower by gravity the auxiliary supporting structure 12, so as to place pallet 1 on the reference seats 13 for the precise positioning thereof. When the necessary work operations are finished, the pallet stop means is deactivated and the actuating cylinders 15 are driven to move the auxiliary supporting structure 12 again to its raised position. When the raising movement has been completed, the actuating cylinders 18 are activated to raise the biassing plates 17, so as to urge rollers 3 of the upper run of the chain against the lower surface of pallet 1, which is thus compelled to rapidly accelerate up to the speed of movement of the chain.

As it will become clearly apparent from the foregoing description, the present invention obtains with simple and unexpensive means both the precise positioning of a pallet at a work station, and the rapid acceleration of the pallet up to a speed which the double of the speed of movement of the chain each time that a pallet is left free at the end of a stop at a work station.

Naturally, while the principle of the invention remains the same, the details of construction and the embodiments may widely vary with respect to what has been described and illustrated purely by way of example, without departing from the scope of the present invention.

## Claims

1. Device for transporting pallets carrying pieces in a production line, comprising:
- a fixed supporting structure (6), and
- at least one endless chain (5) guided on the fixed supporting structure (6) and carrying freely rotatable rollers (3) for supporting piece-carrying pallets (1) at the upper run of said chain (5), so that said pallets (1) are advanced along the fixed supporting structure (6) as a result of the movement of the chain (5) at the same speed of the chain (5),
wherein at one or more stations of the production line the fixed supporting structure (6) is provided at its upper part with an auxiliary supporting structure (12), on which the upper run of the chain directly rests,
characterized in that:
- said auxiliary structure (12) is vertically movable with respect to the fixed supporting structure (6) between a raised position and a lowered position,
- said fixed supporting structure (6) is provided with reference seats (13) adapted to receive and support corresponding reference parts (1a) of a pallet (1) when the latter is held at a station of the line and the auxiliary supporting structure is in its lowered position, so as to provide a precise reference of the proper position of the pallet at said station,
- said fixed supporting structure (6) is provided with actuating means (15) to cause movement of the auxiliary supporting structure (12) between its lowered position and its raised position.

2. Device according to claim 1, characterized in that the fixed supporting structure (6) comprises a profile having at its upper part a channel (6a) within which there is vertically slidably mounted a longitudinal portion (11) of said auxiliary supporting structure (12) and in that said actuating means (15) comprises at least one actuating cylinder interposed between facing walls of said channel (6a) and said longitudinal portion (11).

3. Device according to claim 2, characterized in that said auxiliary supporting structure (12) is provided at its upper part with at least one biassing plate (17) which can be raised from a lowered position to a raised position with respect to the auxiliary supporting structure (12), by means of at least one actuating cylinder (18) provided on the auxiliary structure (12) so as to urge the rollers (3) of the upper run of the chain against the lower surface of the pallet (1), in order to favour acceleration of the pallet up to a speed which is the double of the speed of the chain, when the pallet is not held any longer at one station of the line.

## Patentansprüche

1. Vorrichtung zum Transportieren von werkstücktragenden Paletten in einer Fertigungsstraße, umfassend:
- eine feste Tragstruktur (6), und
- wenigstens eine endlose Kette (5), die auf der festen Tragstruktur (6) geführt ist und frei drehbare Rollen (3) zum Tragen von werkstücktragenden Paletten (1) auf dem oberen Trum der genannten Kette (5) trägt, so daß die genannten Paletten (1) entlang der festen Tragstruktur (6) als Ergebnis der Bewegung der Kette (5) mit derselben Geschwindigkeit der Kette (5) fortbewegt werden,
worin in einer oder mehreren Stationen der Fertigungsstraße die feste Tragstruktur (6) an ihrem oberen Teil mit einer zusätzlichen Tragstruktur (12) versehen ist, auf der das obere Trum der Kette unmittelbar ruht,
**dadurch gekennzeichnet,** daß
die genannte zusätzliche Struktur (12) vertikal in bezug auf die feste Tragstruktur (6) zwischen einer angehobenen Position und einer abgesenkten Position bewegbar ist,
- die genannte feste Tragstruktur (6) mit Bezugssitzen (13) versehen ist, die entsprechende Bezugsteile (1a) einer Palette (1) aufnehmen und tragen können, wenn letztere an einer Station der Straße gehalten ist und die zusätzliche Tragstruktur in ihrer abgesenkten Position ist, so daß ein genauer Bezug der richtigen Position der Palette an der genannten Station geschaffen wird,
- die genannte feste Tragstruktur (6) mit einer Betätigungsvorrichtung (15) versehen ist, um die Bewegung der zusätzlichen Tragstruktur (12) zwischen ihrer abgesenkten Position und ihrer angehobenen Position zu bewirken.

2. Vorrichtung gemäß Anspruch 1, **dadurch gekennzeichnet,** daß die feste Tragstruktur (6) ein Profil umfaßt, das an seinem oberen Teil einen Kanal (6a) aufweist, in dem ein länglicher Abschnitt (11) der genannten zusätzlichen Tragstruktur (12) vertikal verschiebbar angebracht ist, und daß die genannte Betätigungsvorrichtung (15) wenigstens einen Arbeitszylinder umfaßt, der zwischen zueinanderweisenden Wänden des genannten Kanals (6a) und dem genannten länglichen Abschnitt (11) eingefügt ist.

3. Vorrichtung gemäß Anspruch 2, **dadurch gekennzeichnet,** daß die genannte zusätzliche Tragstruktur (12) an ihrem oberen Teil mit wenigstens einer Vorbelastungsplatte (17) versehen ist, die aus einer abgesenkten Position in eine angehobene Position in bezug auf die zusätzliche Tragstruktur (12) mittels wenigstens eines Arbeitszylinders (18) angehoben werden kann, der an der zusätzlichen Struktur (12) vorgesehen ist, so daß die Rollen (3) des oberen Trums der Kette gegen die untere Oberfläche der Palette (1) gedrückt werden, um die Beschleunigung der Palette auf eine Geschwindigkeit zu begünstigen, die das Doppelte der Geschwindigkeit der Kette ist, wenn die Palette nicht mehr länger in einer Arbeitsstation der Straße gehalten wird.

## Revendications

1. Appareil pour transporter des palettes qui portent des pièces dans une ligne de production, comprenant :
- une structure de support fixe (6), et
- au moins une chaîne sans fin (5) guidée sur la structure de support fixe (6) et portant des rouleaux en rotation libre (3) pour supporter des palettes portant des pièces (1) sur le brin supérieur de ladite chaîne (5), de sorte que lesdites palettes (1) sont avancées le long de la structure de support fixe (6) en résultat du mouvement de la chaîne (5), à la même vitesse que la chaîne (5),
dans lequel, à une ou plusieurs stations de la ligne de production, la structure de support fixe (6) est pourvue à sa partie supérieure d'une structure de support auxiliaire (12) sur laquelle repose directement le brin supérieur de la chaîne,
caractérisé en ce que :
- ladite structure auxiliaire (12) est verticalement mobile par rapport à la structure de support fixe (6) entre une position relevée et une position abaissée,
- ladite structure de support fixe (6) est pourvue de sièges de référence (13) adaptés à recevoir et à supporter des parties de référence correspondantes (1a) d'une palette (1) lorsque cette dernière est retenue à une station de la ligne et que la structure de support auxiliaire est dans sa position abaissée, de manière à constituer une référence précise de la position correcte de la palette à ladite station,
- ladite structure de support fixe (6) est pourvue de moyens d'actionnement (15) pour provoquer un mouvement de la structure de support auxiliaire (12) entre sa position abaissée et sa position relevée.

2. Appareil selon la revendication 1, caractérisé en ce que la structure de support fixe (6) comprend un profilé ayant à sa partie supérieure un canal (6a) à l'intérieur duquel est montée en coulissement vertical une partie longitudinale (11) de ladite structure de support auxiliaire (12), et en ce que lesdits moyens d'actionnement (15) comprennent au moins un cylindre d'actionnement interposé entre des parois qui se font face dudit canal (6a) et de ladite partie longitudinale (11).

3. Appareil selon la revendication 2, caractérisé en ce que ladite structure de support auxiliaire (12) est pourvue à sa partie supérieure d'au moins une plaque de poussée (17) qui peut être soulevée depuis une position abaissée jusqu'à une position relevée par rapport à la structure de support auxiliaire (12), au moyen d'au moins un cylindre d'actionnement (18) prévil sur la structure auxiliaire (12) de façon à repousser les rouleaux (3) du brin supérieur de la chaîne contre la surface inférieure de la palette (1), afin de favoriser l'accélération de la palette jusqu'à une vitesse qui est le double de la vitesse de la chaîne, lorsque la palette n'est plus tenue à une station de la ligne.
